# EUROPEAN PATENT SPECIFICATION

(11) **EP 2 665 650 B1**
(45) Date of publication and mention of the grant of the patent: **17.06.2015**
(21) Application number: 12703607.7
(22) Date of filing: 12.01.2012
(51) Int. Cl.: B64F 1/36

(54) **SYSTEM FOR CHECKING IN LUGGAGE**
GEPÄCKABFERTIGUNGSSYSTEM
SYSTÈME D'ENREGISTREMENT DE BAGAGES

(30) Priority: 17.01.2011 NL 2006016
(43) Date of publication of application: 27.11.2013
(73) Proprietor: Vanderlande Industries B.V., 5466 RB Veghel (NL)
(72) Inventor: PORTER, Nicholas David, Weybridge, Surrey KT13 9 EQ (GB)
(74) Representative: Algemeen Octrooi- en Merkenbureau B.V.
(86) International application number: PCT/NL2012/050016
(87) International publication number: WO 2012/099461

(56) References cited:
- EP-A2- 0 271 022
- EP-A2- 1 146 463
- WO-A1-2005/087590
- DE-A1-102009 019 131
- US-A1- 2009 295 544

## Description

The present disclosure relates to a system for checking in luggage.

At airports luggage such as suitcases is checked-in. Conventionally this is done by airport personnel. Passengers go to a check-in counter with their luggage. Personnel at the check-in counter determine the identity of the passenger and accept the luggage which needs to be checked-in. For each piece of luggage which is to be checked-in at the check-in counter a luggage-label will be issued. This label will be affixed to the luggage by the personnel after which the luggage is discharged to the luggage handling system of the airport. The luggage-labels which are used are internationally standardized so that every airport around the world can work with such labels. Since this standardization is done by the International Air Transport Association (IATA) such luggage-labels are often referred to as IATA-labels. On these IATA-labels information is present as plain text and in the form of a bar code. The bar code is read by the luggage handling system for automated handling. Good readability of this bar code is of importance since if a bar code is not read properly this may lead to delay or even loss of luggage. For this reason a proper affixation of the IATA label to the luggage is important. Since the personnel is trained to do so, poor readability of a bar code of an IATA label affixed by personnel to luggage is not a problem.

Currently there is a trend that passengers check-in their luggage themselves without or only with limited aid of airport personnel. For this the passenger after having checked-in him-/herself at a self-check-in counter, proceeds to a check-in station for luggage. After having identified him-/herself at the check-in station for luggage, for instance with a boarding pass, a passport or a frequent flyer card, an IATA label is issued at the check-in station for each piece of luggage which needs to be checked-in. As part of the procedure the passenger affixes the IATA label to the luggage. In practice it appears that some passengers find it difficult to properly affix the IATA label to the luggage. Improper affixing of an IATA label may make it necessary to issue another identical IATA label in case the original label has become unusable. This causes safety complications. Improper affixing of an IATA label may also lead to delays at the check-in station for other passengers waiting in line. Improper affixing may also lead to an increased risk that the associated luggage will not reach its destiny or at least not in time since the bar code on the IATA label cannot be read properly by the bar code readers of the luggage handling system of either the departure airport, the transfer airport(s) or the arrival airport.

US 2009/0295544 A1, which is considered to be the closest prior art, describes the use of a luggage tag which together with a boarding pass, is issued by a self-check-in counter. This luggage tag is not an IATA label. The luggage tag is supposed to be more easily affixable to the luggage by the passenger. For this the luggage tag comprises an elastic band which can be affixed to a handle of the luggage. On the luggage tag information is printed in the form of a bar code. After the luggage tag has been affixed to the luggage, the luggage is conveyed to a workstation. At this workstation a worker is present having the task of using a handheld bar code reader to read the information printed as a bar code on the luggage tag. This information is input into a printer which prints an IATA label. This IATA label is affixed to the luggage by the worker who is professionally trained to do so and consequently is able to properly and efficiently affix IATA labels to luggage. The original luggage tag remains affixed to the luggage.

Viewed from a first aspect the present disclosure provides a system for checking in luggage, comprising a passenger identification terminal for determining a passenger identification of a passenger, a luggage drop-off station for accepting luggage at a drop-off location of the luggage drop-off station, a labelling station having a label issuing terminal for issuing an internationally standardized luggage-label, a presence determination device for determining the presence of luggage at the drop-off location, a conveyor system having a conveyor assembly for conveying luggage along a conveying path from the drop-off location to the label issuing terminal after the presence of luggage at the drop-off location has been determined by the presence determination device, a first control device for controlling the conveyor assembly, a first ID determination device for determining a conveyor identification of a part of the conveyor system which is present at the drop-off location and onto which part luggage is to be dropped off in use, a processing device for defining an internationally standardized luggage-label based on the passenger identification determined by the passenger identification terminal and linking the definition of the internationally standardized luggage-label to the conveyor identification determined by the first ID determination device, a second ID determination device for determining a conveyor identification of a part of the conveyor system present at the labelling station, a second control device for controlling the label issuing terminal based on the determination by the second ID determination device of a conveyor identification and on the link between the definition of the internationally standardized luggage-label and the conveyor identification made by the processing device.

Viewed from a second aspect the present disclosure provides a method for checking in luggage of a passenger, comprising
- determining, by a passenger identification terminal, a passenger identification of a passenger,
- dropping off, by the passenger, luggage at a drop-off location of a luggage drop-off station,
- determining, by a presence determination device, the presence of luggage at the drop-off location,
- determining, by a first ID determination device, a conveyor identification of a part of the conveyor system which is present at the drop-off location onto which part the luggage is dropped off,
- defining, by a processing device, an internationally standardized luggage-label based on the passenger identification determined by the passenger identification terminal,
- linking, by the processing device, the definition of the internationally standardized luggage-label to the conveyor identification determined by the first ID determination device,
- conveying, by a conveyor system, the luggage from the luggage drop-off station to a labelling station having a label issuing terminal,
- determining, by a second ID identification device, the conveyor identification of a part of the conveyor system present at the labelling station,
- controlling, by a second control device, the label issuing terminal based on the determination by the second ID determination device of a conveyor identification and on the link between the definition of the internationally standardized luggage-label to the conveyor identification made by the processing device,
- affixing the internationally standardized luggage-label to the luggage.

According to the first and the second aspect of the present disclosure a very efficient procedure for checking-in luggage can be achieved. More in particular the first and the second aspect of the present disclosure obviate the need to affix any kind of tag/label or the like by a passenger to luggage at the luggage drop-off station, whilst there is also no need for the worker to use a manual reading device.

An example arrangement to illustrate the present disclosure is described hereinafter with reference to the accompanying drawings.
Figure 1 illustrates a passenger identification terminal and an associated luggage drop-off station;
Figure 2 illustrates a system for checking in luggage including the passenger identification terminal and the associated luggage drop-off station of figure 1.

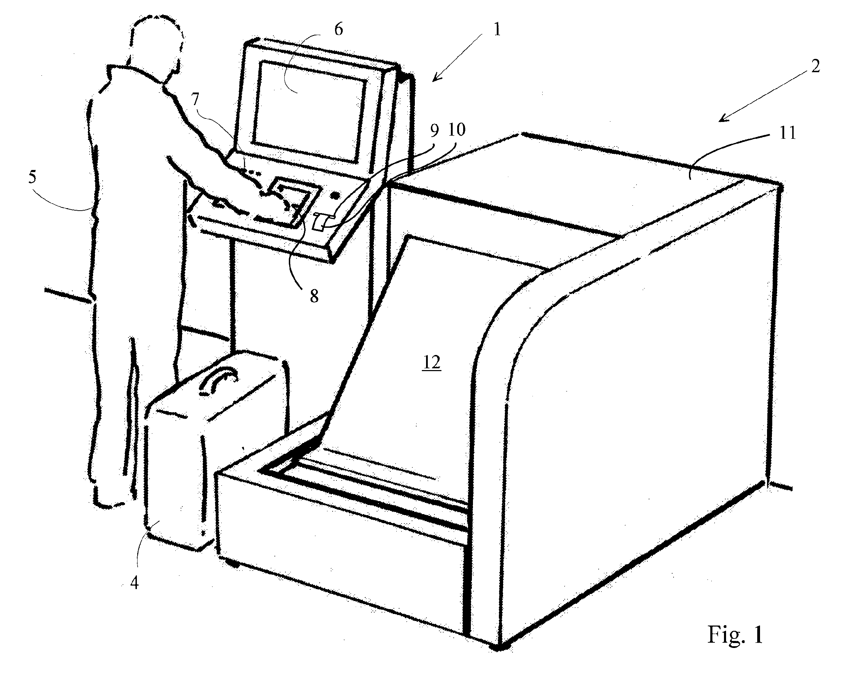

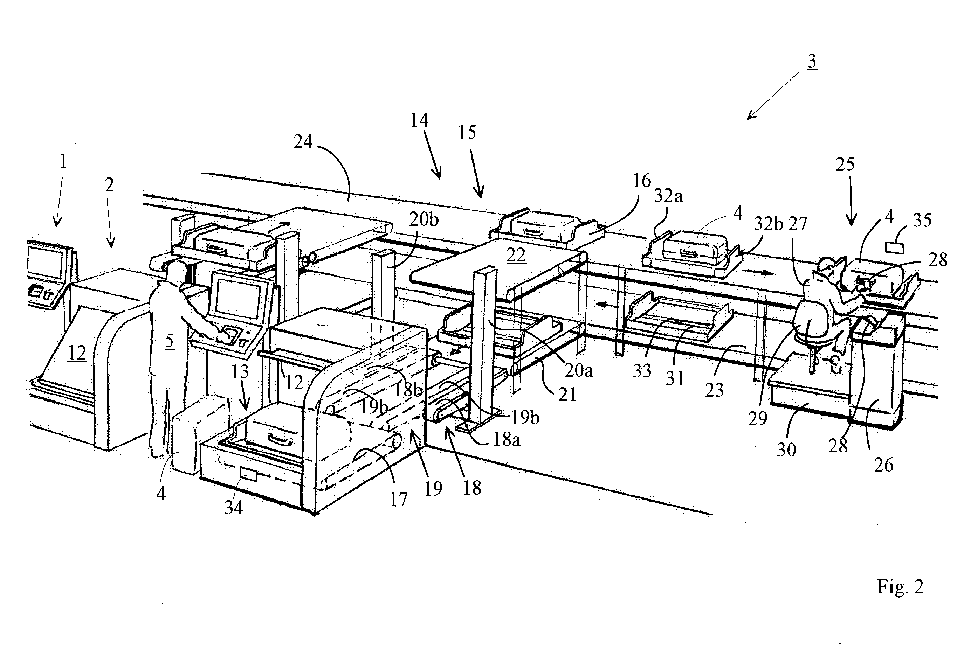

Figure 1 illustrates an example of a passenger identification terminal 1 and an associated luggage drop-off station 2 together being part of a system 3 for checking in luggage, such as a suitcase 4, of a passenger 5, an example of which system is illustrated in figure 2. System 3 comprises several identical combinations of a passenger identification terminal 1 and a luggage drop-off station 2 which combinations are located next to each other. System 3 is controlled by a passenger data server.

The passenger identification terminal 1 comprises a screen 6 on which information and questions to be answered for the passenger 5 can be displayed, as well as a keyboard 7 and other input means 8. The keyboard 7 can be used by the passenger 5 to enter plain text data. The other input means provide an alternative means for the passenger 5 to enter data, for instance by inserting a frequent flyer card, a passport or a boarding pass. The passenger identification terminal 1 furthermore comprises a luggage claim tag issuing device 9 which can print and issue luggage claim tags 10. The passenger identification terminal 1 is arranged to determine the passenger identification of passenger 5 on the basis of information input by the passenger 5 via the keyboard 7 or via the other input means 8.

The luggage drop-off station 2 comprises a housing 11 which is open at its back side. This back side is not accessible by passenger 5. At its front side the luggage drop-off station 2 comprises a port 12 which is movable between a closed position (illustrated in figure 1) and an open position (illustrated in figure 2). In the open position a drop-off location 13 at the front side of the luggage drop-off station 2 is accessible. When the port 12 is in the closed position the drop-off location 13 is not accessible.

System 3 for checking in luggage comprises a conveyor system 14. This conveyor system 14 comprises a conveyor assembly 15 which comprises a number of individual conveyors as well as tubs 16. The individual conveyors yet to be discussed are arranged for conveying the tubs 16, either containing a piece of luggage 4 or not.

At the drop-off location 13 the conveyor assembly 15 comprises a belt conveyor 17 which can be driven in two opposite directions. Associated with this belt conveyor 17 is a weighing device (not shown) with which it is possible to weigh the load on the belt conveyor 17. In line with the belt conveyor 17 the conveyor assembly 15 comprises subsequently two pairs 18, 19 of conveyor belts 18a, 18b and 19a, 19b. Conveyor belts 19a, 19b are located between conveyor belts 18a, 18b. Conveyor belts 18a, 18b, 19a, 19b have a limited width. Conveyor belts 19a, 19b can be driven in two opposite directions whereas conveyor belts 18a, 18b can only be driven in one direction, viz. in the direction away from the luggage drop-off station 2. Conveyor belts 18a, 18b can be moved vertically along two posts 20a, 20b between a lower position and an upper position. In the lower position the upper parts of the pair of conveyor belts 18a, 18b are positioned slightly lower than the upper parts of the pair of conveyor belts 19a, 19b. In the upper position the conveyor belts 18a, 18b connect to a discharge belt conveyor 22. Below discharge belt conveyor 22 a feed belt conveyor 21 is arranged. Feed belt conveyor 21 can only be driven in one direction, viz. in the direction towards the luggage drop-off station 2, whereas discharge belt conveyor 22 can also only be driven in one direction away from the luggage drop-off station 2.

The feed belt conveyor 21 connects to the pair of conveyor belts 19a, 19b and at one end and to a common feed conveyor 23, which extends perpendicular to the feed belt conveyor 21, at the opposite end. At the opposite side of the common feed conveyor 23 a pusher device (not shown) is provided which can push an empty tub 16 from the common feed conveyor 23 onto the feed belt conveyor 21. The discharge belt conveyor 22 connects at one end to the pair of conveyor belts 18a, 18b when in the upper position and at the opposite end to a common discharge conveyor 24 which is arranged above the common feed conveyor 23.

The combination of conveyor belt 17, two pairs of conveyor belts 18a, 18b and 19a, 19b, feed belt conveyor 21 and discharge belt conveyor 22 is provided for each of the neighbouring luggage drop-off stations 2 of system 3 for checking-in luggage. Each of the feed belt conveyors 21 and discharge belt conveyors 22 connect to the common feed conveyor 23 and the common discharge conveyor 24 respectively.

At the downstream side of the common discharge conveyor 24, system 3 comprises a labelling station 25. The labelling station 25 is provided with a label issuing terminal 26. The label issuing terminal 26 is arranged to issue luggage-labels 28 which are internationally standardized by IATA. These labels will be referred to as IATA labels 28. A worker 27 is present at the labelling station 25. Sitting on chair 29 located on platform 30, worker 27 has a working range within which both IATA labels 28 can be taken from the label issuing terminal 26 by worker 27. Those IATA labels 28 can be affixed manually, by the worker 27, to the handle of the luggage 4 in a tub 16 which is present on the common discharge conveyor 24 at a position opposite the labelling station 25.

The tubs 16 have a bottom 31 which may be concave and two upstanding wall parts 32a, 32b at its outer ends. The tubs 16 each comprise a RFID-tag 33 which may be integrated in its bottom 31, for example. These RFID-tags 33 provide a unique identification for each tub 16. The RFID tags can be read by RFID tag readers which as such are known to the skilled person. System 3 comprises such RFID tag readers at each drop-off location 13. Those RFID tag readers are schematically illustrated in figure 2 and indicated by reference number 34. System 3 also comprises such a RFID tag reader at the labelling station 25. This RFID tag reader is also schematically illustrated in figure 1 and indicated by reference number 35. RFID tag readers 34 are arranged for reading the RFID tag 33 of a tub 16 present at the associated drop-off location 13, whereas RFID tag reader 35 is arranged for reading the RFID tag 33 of a tub 16 present on the common discharge conveyor 24 at a position close to the labelling station 25.

Next a method according to which system 3 may be operated will be described. Passenger 5 has a suitcase 4 which needs to be checked-in. The passenger identifies himself at the passenger identification terminal 1 for example by inserting a frequent flyer card in a slot of the other input means 8. The passenger identification terminal 1 forwards the passenger identification to the passenger data server. Optionally the passenger identification terminal 1 may print and issue a boarding pass for the passenger 5 himself. Alternatively passenger 5 has obtained a boarding pass at an earlier stage and at a different location. Passenger 5 will be asked via screen 6 to indicate how many pieces of luggage 4 he would like to check-in. The passenger 5 answers this question for instance via the keyboard 7 or via screen 6 in case screen 6 of the touch-screen type. For each piece of luggage the passenger data server will define an IATA label.

Next, port 12 will move to its open position. At that time an empty tub 16 will be present at the drop-off location 13. This tub 16 is fed to the drop-off location by successively common feed conveyor 23, feed belt conveyor 21, pair of conveyor belts 19a, 19b and belt conveyor 17. For transferring the tub 16 from the common feed conveyor 23 to the feed belt conveyor 21 the pusher device is used. Once the tub 16 has arrived at the drop-off location 13, the RFID tag 33 (being the tub identification) of the tub 16 is read by RFID tag reader 34. This tub identification is forwarded to the passenger data server.

Port 12, being in its open position, allows passenger 5 to put his (first) piece of luggage 4 in the empty tub 16 at the drop-off location 13. The weighing device of luggage drop-off station 2 will sense the increase of weight caused by the piece of luggage 4 and will forward this information to the passenger data server. The passenger data server will link the definition of the IATA label as defined by the passenger data server for the piece of luggage 4 in question to the tub identification. In response to the increased-weight signal, the passenger data server issues the command to the luggage drop-off station to close port 12 and issues the command to the passenger identification terminal 1 to have a luggage claim tag 10 issued by the luggage claim tag issuing device 9. Passenger 5 takes this luggage claim tag 10 in order to keep it as evidence that he dropped his luggage 4 at the drop-off location 13.

After closure of port 12 and provided that the pair of conveyor belts 18a, 18b is in its lower position, tub 16 loaded with a piece of luggage 4, will be discharged for which tub 16 is conveyed by subsequently belt conveyor 17 and pair of conveyor belts 19a, 19b to a position directly above the pair of conveyor belts 18a, 18b. The pair of conveyor belts 18a, 18b are next moved from their lower position to their upper position. When the pair of conveyor belts 18a, 18b are in the upper position a succeeding empty tub 16 can be fed to the luggage drop-off location 13. In case the passenger 5 has multiple pieces of luggage 4 to be checked in, the above procedure will be repeated for each piece of luggage 4.

The tub 16 loaded with the (first) piece of luggage 4 will be discharged further by conveyor belts 18a, 18b, discharge belt conveyor 22 and common discharge conveyor 24 until it arrives at the labelling station 25. At that position the RFID tag 33 of tub 16 is read by RFID tag reader 35. The tub identification is forwarded by the RFID tag reader to the passenger data server. The passenger data server in response issues an instruction to the label issuing terminal 26 to print and issue an IATA label 28 according to the definition which, as described above, was linked to the tub identification in question by the passenger data server at an earlier stage when the tub 16 was at the luggage drop-off location13. After issuance of the IATA label 28 the passenger data server removes the link between the definition of the IATA label 28 and the tub identification. The issued IATA label 28 is affixed to the luggage 4 by the worker 27 and the tub 16 is discharged further, away from the labelling station 25 towards the luggage handling system of the airport in question.

Handling by the luggage handling system of luggage 4 can be done while the luggage 4 remains in the tub 16. Alternatively relatively shortly downstream of the labelling station 25 the tub 16 can be unloaded and the luggage 4 is handled as such by the luggage handling system whilst the (now empty) tub 16 is returned to the common feed conveyor 23.

## Claims

1. System (3) for checking in luggage, comprising a passenger identification terminal (1) for determining a passenger (5) identification of a passenger, a luggage drop-off station (2) for accepting luggage (4) at a drop-off location (13) of the luggage drop-off station (2), a labelling station (25) having a label issuing terminal (26) for issuing an internationally standardized luggage-label (28), a presence determination device (34) for determining the presence of luggage at the drop-off location (13), a conveyor system having a conveyor assembly (21, 22) for conveying luggage (4) along a conveying path from the drop-off location (13) to the label issuing terminal (26) after the presence of luggage (4) at the drop-off location has been determined by the presence determination device (34), a first control device for controlling the conveyor assembly, a first ID determination device for determining a conveyor identification of a part of the conveyor system which is present at the drop-off location (13) and onto which part luggage (4) is to be dropped off in use, a processing device for defining an internationally standardized luggage-label (28) based on the passenger identification determined by the passenger identification. terminal (4) and linking the definition of the internationally standardized luggage-label (28) to the conveyor identification determined by the first ID determination device, a second ID determination device for determining a conveyor identification of a part of the conveyor system present at the labelling station (25), a second control device for controlling the label issuing terminal based on the determination by the second ID determination device of a conveyor identification and on the link between the definition of the internationally standardized luggage-label (28) and the conveyor identification made by the processing device.

2. System according to claim 1, the conveyor system comprising containers each having a container identification, the luggage drop-off station being arranged for accepting luggage at the drop-off location of the luggage drop-off station in a container, the conveyor system being arranged for conveying luggage in a container, the first ID determination device comprising a first identification device which is arranged for reading the container identification of a container at the drop-off location, the processing device being arranged for linking the definition of the internationally standardized luggage-label to the container identification constituting a conveyor identification, the second ID determination device comprising a second identification device which is arranged for reading the container identification of a container present at the labelling station, the second control device being arranged for controlling the label issuing terminal based on the reading by the second ID identification device of a container identification and on the link between the definition of the internationally standardized luggage-label to the container identification made by the processing device.

3. System according to claim 2, the conveyor system being arranged for conveying empty containers to the drop-off location.

4. System according to claim 1, the conveyor assembly having subsequent windows each having a window identification each window being arranged for receiving a single piece of luggage, the first ID determination device being arranged for determining the window identification of the window of the conveyor assembly which is present at the drop-off location and onto which part luggage is to be dropped off in use, the processing device being arranged for linking the definition of the internationally standardized luggage-label to the window identification constituting a conveyor identification to a passenger identification, the second ID determination device being arranged for determining a window identification of a window present at the labelling station, the second control device being arranged for controlling the label issuing terminal based on the determination of the window identification by the second ID determination device and on the link between the definition of the internationally standardized luggage-label to the window identification made by the processing device.

5. System according to any of the preceding claims, the passenger identification terminal being arranged for issuing boarding passes.

6. System according to any of the preceding claims, the passenger identification terminal and the drop-off location being arranged next to each other.

7. System according to any of the preceding claims, the luggage drop-off station comprising a port which is movable between an open position and a closed position wherein the port blocks entrance to the drop-off location in the closed position and the port allows such entrance in the open position.

8. System according to any of the preceding claims, the passenger identification terminal, the first control device, the processing device and the second control device being part of a passenger data server.

9. System according to claim 8, the passenger data server being arranged for removing the link between the definition of an internationally standardized luggage-label and a conveyor identification made by the processing device after the internationally standardized luggage-label has been issued by the label issuing terminal.

10. System according to any of the preceding claims, comprising a tag issuing terminal for issuing luggage claim tags.

11. System according to any of the preceding claims, comprising a number of luggage drop-off stations, the conveyor assembly for each luggage drop-off station having a drop-off conveyor assembly and a common discharge conveyor to which the drop-off conveyors connect, the labelling station being provided along the common discharge conveyor downstream of a group of drop off conveyors.

12. Method for checking in luggage of a passenger, comprising
- determining, by a passenger identification terminal, a passenger identification of a passenger,
- dropping off, by the passenger, luggage at a drop-off location of a luggage drop-off station,
- determining, by a presence determination device, the presence of luggage at the drop-off location,
- determining, by a first ID determination device, a conveyor identification of a part of the conveyor system which is present at the drop-off location onto which part the luggage is dropped off,
- defining, by a processing device, an internationally standardized luggage-label based on the passenger identification determined by the passenger identification terminal,
- linking, by the processing device, the definition of the internationally standardized luggage-label to the conveyor identification determined by the first ID determination device,
- conveying, by a conveyor system, the luggage from the luggage drop-off station to a labelling station having a label issuing terminal,
- determining, by a second ID identification device, the conveyor identification of a part of the conveyor system present at the labelling station,
- controlling, by a second control device, the label issuing terminal based on the determination by the second ID determination device of a conveyor identification and on the link between the definition of the internationally standardized luggage-label to the conveyor identification made by the processing device,
- affixing the internationally standardized luggage-label to the luggage.

13. Method according to claim 12 comprising
- dropping off, by the passenger, luggage at the drop-off location of the luggage drop-off station in a container having a container identification
- conveying, by the conveyor system, the luggage in the container from the luggage drop-off station to a labelling station,
- using, by the processing device and the second control device, the container identification as the conveyor identification.

14. Method according to claim 12 comprising
- dropping off, by a passenger, luggage at the drop-off location of the luggage drop-off station on a window of the conveyor system, the window having a window identification,
- using, by the processing device and the second control device, the window identification as the conveyor identification.

15. Method according to claim 12, 13 or 14, comprising
- removing, by a passenger data server of which at least the passenger identification terminal, the first processing device and the second processing device are part, the link between the definition of an internationally standardized luggage-label and a conveyor identification made by the processing device, after the internationally standardized luggage-label has been issued by the labelling station.

## Patentansprüche

1. Gepäckabfertigungssystem (3), mit einem Passagieridentifikationsterminal (1) zur Bestimmung einer Passagierkennung eines Passagiers (5), einer Gepäckaufgabestation (2) zur Annahme von Gepäck (4) an einer Aufgabestelle (13) der Gepäckaufgabestation (2), einer Kennzeichnungsstation (25) mit einem Anhängererstellungsterminal (26) zur Erstellung eines international standardisierten Gepäckanhängers (28), einer Anwesenheitsbestimmungsvorrichtung (34) zur Bestimmung der Anwesenheit von Gepäck an der Aufgabestelle (13), einem Fördersystem mit einer Förderanordnung (21, 22) zur Beförderung von Gepäck (4) entlang einer Förderbahn von der Aufgabestelle (13) zu dem Anhängererstellungsterminal (26), nachdem die Anwesenheit von Gepäck (4) an der Aufgabestelle durch die Anwesenheitsbestimmungsvorrichtung (34) bestimmt wurde, einer ersten Steuervorrichtung zur Steuerung der Förderanordnung, einer ersten ID-Bestimmungsvorrichtung zum Festlegen einer Förderkennung eines Abschnitts des Fördersystems, der an der Aufgabestelle (13) zugegen ist und auf welchen Gepäck (4) im Gebrauch aufgegeben werden soll, einer Verarbeitungsvorrichtung zum Definieren eines international standardisierten Gepäckanhängers (28) anhand der vom Passagieridentifikationsterminal (1) bestimmten Passagierkennung und zur Verknüpfung der Definition des international standardisierten Gepäckanhängers (28) mit der von der ersten ID-Bestimmungsvorrichtung festgelegten Förderkennung, einer zweiten ID-Bestimmungsvorrichtung zum Festlegen einer Förderkennung eines Abschnitts des Fördersystems, der an der Kennzeichnungsstation (25) zugegen ist, und einer zweiten Steuervorrichtung zur Steuerung des Anhängererstellungsterminals anhand der Bestimmung einer Förderkennung durch die zweite ID-Bestimmungsvorrichtung und der Verknüpfung zwischen der Definition des international standardisierten Gepäckanhängers (28) und der durch die Verarbeitungsvorrichtung erstellten Förderkennung.

2. System nach Anspruch 1, wobei das Fördersystem Behälter mit jeweils einer Behälterkennung umfasst, die Gepäckaufgabestation für die Annahme von Gepäck in einen Behälter an der Aufgabestelle der Gepäckaufgabestation eingerichtet ist, das Fördersystem für die Beförderung von Gepäck in einem Behälter eingerichtet ist, die erste ID-Bestimmungsvorrichtung eine erste Identifikationsvorrichtung umfasst, welche für das Lesen der Behälterkennung eines Behälters an der Aufgabestelle eingerichtet ist, die Verarbeitungsvorrichtung für die Verknüpfung der Definition des international standardisierten Gepäckanhängers mit der Behälterkennung eingerichtet ist, die einer Förderkennung bildet, die zweite ID-Bestimmungsvorrichtung eine zweite Identifikationsvorrichtung umfasst, welche für das Lesen der Behälterkennung eines an der Kennzeichnungsstation vorhandenen Behälters eingerichtet ist, und die zweite Steuervorrichtung zur Steuerung des Anhängererstellungsterminals anhand des Lesens einer Behälterkennung durch die zweite ID-Bestimmungsvorrichtung und der Verknüpfung zwischen der Definition des international standardisierten Gepäckanhängers mit der durch die Verarbeitungsvorrichtung erstellten Behälterkennung eingerichtet ist.

3. System nach Anspruch 2, wobei das Fördersystem für die Beförderung leerer Behälter zur Aufgabestelle eingerichtet ist.

4. System nach Anspruch 1, wobei die Förderanordnung nachfolgende Fenster mit jeweils einer Fensterkennung hat und jedes Fenster zur Aufnahme eines einzelnen Gepäckstücks eingerichtet ist, die erste ID-Bestimmungsvorrichtung zur Bestimmung der Fensterkennung des Fensters der Förderanordnung, das an der Aufgabestelle zugegen ist und auf welchen Abschnitt Gepäck im Gebrauch aufgegeben werden soll, eingerichtet ist, die Verarbeitungsvorrichtung zur Verknüpfung der Definition des international standardisierten Gepäckanhängers mit der Fensterkennung eingerichtet ist, die eine Förderkennung für eine Passagierkennung bildet, die zweite ID-Bestimmungsvorrichtung zur Bestimmung einer Fensterkennung eines Fensters, das an der Kennzeichnungsstation zugegen ist, eingerichtet ist, und die zweite Steuervorrichtung zur Steuerung des Anhängererstellungsterminals anhand der Bestimmung der Fensterkennung durch die zweite ID-Bestimmungsvorrichtung und der Verknüpfung zwischen der Definition des international standardisierten Gepäckanhängers mit der durch die Verarbeitungsvorrichtung erstellten Fensterkennung eingerichtet ist.

5. System nach einem der vorangehenden Ansprüche, wobei das Passagieridentifikationsterminal zur Erstellung von Bordkarten eingerichtet ist.

6. System nach einem der vorangehenden Ansprüche, wobei das Passagieridentifikationsterminal und die Aufgabestelle nebeneinander angeordnet sind.

7. System nach einem der vorangehenden Ansprüche, wobei die Gepäckaufgabestation eine Öffnung umfasst, die zwischen einer offenen Position und einer geschlossenen Position bewegt werden kann, wobei die Öffnung in geschlossener Position den Zugang zu der Aufgabestelle versperrt und die Öffnung in geöffneter Position einen solchen Zugang gewährt.

8. System nach einem der vorangehenden Ansprüche, wobei das Passagieridentifikationsterminal, die erste Steuervorrichtung, die Verarbeitungsvorrichtung und die zweite Steuervorrichtung Teil eines Passagierdatenservers sind.

9. System nach Anspruch 8, wobei der Passagierdatenserver zum Entfernen der Verknüpfung zwischen der Definition eines international standardisierten Gepäckanhängers und einer durch die Verarbeitungsvorrichtung erstellten Förderkennung, nachdem der international standardisierte Gepäckanhänger von dem Anhängererstellungsterminal erstellt wurde, eingerichtet ist.

10. System nach einem der vorangehenden Ansprüche, welches einen Markenerstellungsterminal zur Erstellung von Gepäckausgabemarken umfasst.

11. System nach einem der vorangehenden Ansprüche, welches eine Anzahl an Gepäckaufgabestationen umfasst, wobei die Förderanordnung für jede Gepäckaufgabestation eine Aufgabeförderanordnung und einen gemeinsamen Abladeförderer besitzt, an den die Aufgabeförderer anschließen, wobei die Kennzeichnungsstation längs des gemeinsamen Abladeförderers stromabwärts einer Gruppe von Aufgabeförderern vorgesehen ist.

12. Verfahren zur Abfertigung von Gepäck eines Passagiers, welches umfasst
- Bestimmung einer Passagierkennung eines Passagiers durch ein Passagieridentifikationsterminal,
- Aufgabe von Gepäck durch den Passagier an einer Aufgabestelle einer Gepäckaufgabestation,
- Bestimmung der Anwesenheit von Gepäck an der Aufgabestelle durch eine Anwesenheitsbestimmungsvorrichtung,
- Bestimmung einer Förderkennung eines Abschnitts des Fördersystems, der an der Aufgabestelle zugegen ist und auf welchen das Gepäck aufgegeben wird, durch eine erste ID-Bestimmungsvorrichtung,
- Definieren eines international standardisierten Gepäckanhängers anhand der vom Passagieridentifikationsterminal bestimmten Passagierkennung durch eine Verarbeitungsvorrichtung,
- Verknüpfung der Definition des international standardisierten Gepäckanhängers mit der durch die erste ID-Bestimmungsvorrichtung festgelegten Förderkennung durch die Verarbeitungsvorrichtung,
- Beförderung des Gepäcks von der Gepäckaufgabestation zu einer Kennzeichnungsstation mit einem Anhängererstellungsterminal durch ein Fördersystem,
- Bestimmung der Förderkennung eines Abschnitts des Fördersystems, der an der Kennzeichnungsstation zugegen ist, durch eine zweite ID-Bestimmungsvorrichtung,
- Steuerung des Anhängererstellungsterminals anhand der Bestimmung einer Förderkennung durch die zweite ID-Bestimmungsvorrichtung und der Verknüpfung zwischen der Definition des international standardisierten Gepäckanhängers mit der durch die Verarbeitungsvorrichtung erstellten Förderkennung, durch eine zweite Steuervorrichtung,
- Befestigung des international standardisierten Gepäckanhängers am Gepäck.

13. Verfahren nach Anspruch 12, welches umfasst
- Aufgabe von Gepäck durch den Passagier an der Aufgabestelle der Gepäckaufgabestation in einen Behälter mit einer Behälterkennung,
- Beförderung des Gepäcks in dem Behälter von der Gepäckaufgabestation zu einer Kennzeichnungsstation durch das Fördersystem,
- Nutzen der Behälterkennung von der Verarbeitungsvorrichtung und der zweiten Steuervorrichtung als die Förderkennung.

14. Verfahren nach Anspruch 12, welches umfasst
- Aufgabe von Gepäck durch einen Passagier an der Aufgabestelle der Gepäckaufgabestation in ein Fenster des Fördersystems, wobei das Fenster eine Fensterkennung besitzt,
- Nutzen der Fensterkennung von der Verarbeitungsvorrichtung und der zweiten Steuervorrichtung als die Förderkennung.

15. Verfahren nach Anspruch 12, 13 oder 14, welches umfasst
- Entfernen der Verknüpfung zwischen der Definition eines international standardisierten Gepäckanhängers und einer durch die Verarbeitungsvorrichtung erstellten Förderkennung, nachdem der international standardisierte Gepäckanhänger von der Kennzeichnungsstation erstellt wurde, durch einen Passagierdatenserver, zu dem zumindest das Passagieridentifikationsterminal, die erste Verarbeitungsvorrichtung und die zweite Verarbeitungsvorrichtung gehören.

## Revendications

1. Système (3) d'enregistrement de bagages, comprenant un terminal d'identification de passager (1) destiné à déterminer une identification de passager (5) d'un passager, une station de dépôt de bagages (2) destinée à accepter un bagage (4) au niveau d'un emplacement de dépôt (13) de la station de dépôt de bagages (2), une station d'étiquetage (25) ayant un terminal émetteur d'étiquette (26) destiné à émettre une étiquette de bagages normalisée sur le plan international (28), un dispositif de détermination de présence (34) destiné à déterminer la présence d'un bagage au niveau de l'emplacement de dépôt (13), un système de transporteur ayant un ensemble de transporteur (21, 22) destiné à transporter des bagages (4) le long d'un chemin de transport de l'emplacement de dépôt (13) au terminal émetteur d'étiquette (26) après que la présence de bagages (4) au niveau de l'emplacement de dépôt a été déterminée par le dispositif de détermination de présence (34), un premier dispositif de commande destiné à commander l'ensemble transporteur, un premier dispositif de détermination d'ID destiné à déterminer une identification de transporteur d'une partie du système de transporteur qui est présente au niveau de l'emplacement de dépôt (13) et sur laquelle partie des bagages (4) doivent être déposés en utilisation, un dispositif de traitement destiné à définir une étiquette de bagages normalisée sur le plan international (28) en se basant sur l'identification de passager déterminée par le terminal d'identification de passager (1) et relier la définition de l'étiquette de bagages normalisée sur le plan international (28) à l'identification de transporteur déterminée par le premier dispositif de détermination d'ID, un second dispositif de détermination d'ID destiné à déterminer une identification de transporteur d'une partie du système de transporteur présente au niveau de la station d'étiquetage (25), un second dispositif de commande destiné à commander le terminal émetteur d'étiquette en se basant sur la détermination par le second dispositif de détermination d'ID d'une identification de transporteur et sur la liaison entre la définition de l'étiquette de bagages normalisée sur le plan international (28) et l'identification de transporteur réalisée par le dispositif de traitement.

2. Système selon la revendication 1, le système de transporteur comprenant des conteneurs ayant chacun une identification de conteneur, la station de dépôt de bagages étant agencée pour accepter des bagages au niveau de l'emplacement de dépôt de la station de dépôt de bagages dans un conteneur, le système de transporteur étant agencé pour transporter les bagages dans un conteneur, le premier dispositif de détermination d'ID comprenant un premier dispositif d'identification qui est agencé pour lire l'identification de conteneur d'un conteneur au niveau de l'emplacement de dépôt, le dispositif de traitement étant agencé pour lier la définition de l'étiquette de bagages normalisée sur le plan international à l'identification de conteneur constituant une identification de transporteur, le second dispositif de détermination d'ID comprenant un second dispositif d'identification qui est agencé pour lire l'identification de conteneur d'un conteneur présent au niveau de la station d'étiquetage, le second dispositif de commande étant agencé pour commander le terminal émetteur d'étiquette en se basant sur la lecture par le second dispositif d'identification ID d'une identification de conteneur et sur la liaison entre la définition de l'étiquette de bagages normalisée sur le plan international et l'identification de conteneur réalisée par le dispositif de traitement.

3. Système selon la revendication 2, le système de transporteur étant agencé pour transporter des conteneurs vides vers l'emplacement de dépôt.

4. Système selon la revendication 1, l'ensemble de transporteur ayant des fenêtres consécutives ayant chacune une identification de fenêtre, chaque fenêtre étant agencée pour recevoir un article de bagage unique, le premier dispositif de détermination d'ID étant agencé pour déterminer l'identification de fenêtre de la fenêtre de l'ensemble de transporteur qui est présente au niveau de l'emplacement de dépôt et sur laquelle partie des bagages doivent être déposés en utilisation, le dispositif de traitement étant agencé pour lier la définition de l'étiquette de bagages normalisée sur le plan international à l'identification de fenêtre constituant une identification de transporteur à une identification de passager, le second dispositif de détermination d'ID étant agencé pour déterminer une identification de fenêtre d'une fenêtre présente au niveau de la station d'étiquetage, le second dispositif de commande étant agencé pour commander le terminal émetteur d'étiquette en se basant sur la détermination de l'identification de fenêtre par le second dispositif de détermination d'ID et sur la liaison entre la définition de l'étiquette de bagages normalisée sur le plan international et l'identification de fenêtre réalisée par le dispositif de traitement.

5. Système selon l'une quelconque des revendications précédentes, le terminal d'identification de passager étant agencé pour émettre des cartes d'embarquement.

6. Système selon l'une quelconque des revendications précédentes, le terminal d'identification de passager et l'emplacement de dépôt étant agencés l'un à côté de l'autre.

7. Système selon l'une quelconque des revendications précédentes, la station de dépôt de bagages comprenant un orifice qui est mobile entre une position ouverte et une position fermée, dans lequel l'orifice bloque l'entrée à l'emplacement de dépôt dans la position fermée et l'orifice permet une telle entrée dans la position ouverte.

8. Système selon l'une quelconque des revendications précédentes, le terminal d'identification de passager, le premier dispositif de commande, le dispositif de traitement et le second dispositif de commande faisant partie d'un serveur de données de passager.

9. Système selon la revendication 8, le serveur de données de passager étant agencé pour supprimer la liaison entre la définition d'une étiquette de bagages normalisée sur le plan international et une identification de transporteur réalisée par le dispositif de traitement après que l'étiquette de bagages normalisée sur le plan international a été émise par le dispositif émetteur d'étiquette.

10. Système selon l'une quelconque des revendications précédentes, comprenant un terminal émetteur d'autocollant destiné à émettre des autocollants de récupération de bagages.

11. Système selon l'une quelconque des revendications précédentes, comprenant un certain nombre de stations de dépôt de bagages, l'ensemble de transporteur pour chaque station de dépôt de bagages ayant un ensemble de transporteur de dépôt et un transporteur de déversement commun auquel les transporteurs de dépôt se raccordent, la station d'étiquetage étant agencée le long du transporteur de déversement commun en aval d'un groupe de transporteurs de dépôt.

12. Procédé d'enregistrement des bagages d'un passager, comprenant :
- la détermination, par un terminal d'identification de passager, d'une identification de passager d'un passager,
- le dépôt, par le passager, de bagages au niveau d'un emplacement de dépôt d'une station de dépôt de bagages,
- la détermination, par un dispositif de détermination de présence, de la présence des bagages au niveau de l'emplacement de dépôt,
- la détermination, par un premier dispositif de détermination d'ID, d'une identification de transporteur d'une partie du système de transporteur qui est présente au niveau de l'emplacement de dépôt sur laquelle partie des bagages sont déposés,
- la définition, par un dispositif de traitement, d'une étiquette de bagages normalisée sur le plan international en se basant sur l'identification de passager déterminée par le terminal d'identification de passager,
- la liaison, par le dispositif de traitement, de la définition de l'étiquette de bagages normalisée sur le plan international à l'identification de transporteur déterminée par le premier dispositif de détermination d'ID,
- le transport, par un système de transporteur, des bagages de la station de dépôt de bagages à une station d'étiquetage ayant un terminal émetteur d'étiquette,
- la détermination, par un second dispositif d'identification d'ID, de l'identification de transporteur d'une partie du système de transporteur présente au niveau de la station d'étiquetage,
- la commande, par un second dispositif de commande, du terminal émetteur d'étiquette en se basant sur la détermination par le second dispositif de détermination d'ID d'une identification de transporteur et sur la liaison entre la définition de l'étiquette de bagages normalisée sur le plan international et l'identification de transporteur réalisée par le dispositif de traitement,
- la fixation de l'étiquette de bagages normalisée sur le plan international aux bagages.

13. Procédé selon la revendication 12 comprenant :
- le dépôt, par le passager, de bagages au niveau de l'emplacement de dépôt de la station de dépôt de bagages dans un conteneur ayant une identification de conteneur,
- le transport, par le système de transport, des bagages dans le conteneur de la station de dépôt de bagages à une station d'étiquetage,
- l'utilisation, par le dispositif de traitement et le second dispositif de commande, de l'identification de conteneur comme identification de transporteur.

14. Procédé selon la revendication 12, comprenant :
- le dépôt, par un passager, des bagages au niveau de l'emplacement de dépôt de la station de dépôt de bagages sur une fenêtre du système de transporteur, la fenêtre ayant une identification de fenêtre,
- l'utilisation, par le dispositif de traitement et le second dispositif de commande, de l'identification de fenêtre comme identification de transporteur.

15. Procédé selon la revendication 12, 13 ou 14, comprenant :
- la suppression, par un serveur de données de passager dont au moins le terminal d'identification de passager, le premier dispositif de traitement et le second dispositif de traitement font partie, de la liaison entre la définition d'une étiquette de bagages normalisée sur le plan international et d'une identification de transporteur réalisée par le dispositif de traitement, après que l'étiquette de bagages normalisée sur le plan international a été émise par la station d'étiquetage.
